# EUROPÄISCHE PATENTSCHRIFT

(11) **EP 4 501 692 B1**
(45) Veröffentlichungstag und Bekanntmachung des Hinweises auf die Patenterteilung: **24.06.2026**
(21) Anmeldenummer: 24192244.2
(22) Anmeldetag: 01.08.2024
(51) Int. Cl.: B60L 15/20, B60L 50/20, B62M 6/45, A63B 24/00

(54) **STEUEREINHEIT MIT EINEM STROMMODUL ZUR BESTIMMUNG EINES GENERATORSTROMS**
CONTROL UNIT COMPRISING A CURRENT MODULE FOR DETERMINING A GENERATOR CURRENT
UNITÉ DE COMMANDE COMPRENANT UN MODULE DE PUISSANCE POUR DÉTERMINER UN COURANT DE GÉNÉRATEUR

(30) Priorität: 01.08.2023 DE 102023120441
(43) Veröffentlichungstag der Anmeldung: 05.02.2025
(73) Patentinhaber: MOVARIA GmbH, 80339 München (DE)
(72) Erfinder: Ballendat, Felix, 80339 München (DE); Karbaumer, Jakob, 80339 München (DE)
(74) Vertreter: Flocke, Ben Amade Matthias

(56) Entgegenhaltungen:
- EP-B1- 1 165 188
- EP-B1- 3 408 168

## Beschreibung

### Technisches Gebiet

Die vorliegende Erfindung betrifft eine Steuereinheit zur Ansteuerung einer elektrischen Maschine, der ein Tretmoment bei einer Winkelgeschwindigkeit mittels einer Tretkurbel zuführbar ist.

### Stand der Technik

Elektrisch betriebene Fahrzeuge, wie beispielsweise Fahrräder, insbesondere kettenlose Lastenfahrräder, erfreuen sich zunehmender Beliebtheit. Im Bereich einer Radnabe kann ein elektrischer Antrieb vorgesehen sein. Dieser kann seine Leistung von einer Antriebsbatterieeinheit beziehen. Unterstützend kann ein Generator, der in einem Bereich einer mittels Pedalen über Muskelkraft angetriebenen Tretkurbel vorgesehen ist, die Antriebsbatterieeinheit mit Strom versorgen.

In der Patentschrift DE 10 2020 131 674 B3 ist ein elektrisches Antriebssystem offenbart, bei dem eine mechanische Tretleistung einem Generator zugeführt wird, der eine Leistung kettenlos an einen Elektromotor übermittelt. Aufgrund der kettenlosen Übermittlung entspreche ein Tretgefühl nicht demjenigen, welches eine Nutzerin von mechanisch gekoppelten Antriebssystemen kenne. Entsprechend zielt jene Patentschrift darauf ab, ein haptisches Tretgefühl zu verbessern. Sie schlägt vor, abhängig von Drehzahl eines Antriebsrads und der Drehzahl eines Generators ein Generator-Solldrehmoment M_{G, soll} zu ermitteln. Dieses wird zum einen dem Generator als Drehmomentvorgabe übermittelt. Zum anderen wird aus dem Generator-Solldrehmoment M_{G, soll} ein Antriebsmotor-Solldrehmoment M_{A, soll} ermittelt, in dessen Abhängigkeit die Ansteuerung des Elektromotors erfolgt. Insofern dient die tatsächliche Drehzahl des Antriebsrads als Bestimmungsgröße für das elektrische Antriebsmoment.

In der Offenlegungsschrift DE 10 2013 012 208 A1 ist ein weiteres elektrisches Antriebssystem für ein mit Muskelkraft betriebenes Fahrzeug offenbart. Jene Offenlegungsschrift zielt darauf ab, in einer Tretkurbel einen solchen Tretwiderstand zu bewirken, dass das Tretgefühl bei einem Anfahren aus dem Stillstand dem Tretgefühl eines konventionell mit Muskelkraft betriebenen Fahrzeugs gleicht. Sie schlägt dafür ein System vor, bei dem aus der tatsächlichen Drehzahl des Antriebsrads die Stromstärke des Elektromotors zu bestimmen ist.

Die internationale Veröffentlichungsschrift WO 2015/128818 A1 offenbart einen weiteren elektrischen Antriebsstrang. Ein Gegendrehmoment eines Generators bestimmt den Generatorstrom, der einem Antriebsmotor zugeführt wird. Leistungsparameter des Antriebsmotors werden einer Steuereinheit zugeführt, um basierend hierauf den Generatorstrom zu variieren.

Weiterer Stand der Technik ist aus der Europäischen Offenlegungsschrift EP 3 408 168 B1 bekannt.

### Darstellung der Erfindung

Es ist eine Aufgabe der vorliegenden Erfindung, eine verbesserte Steuereinheit zur Ansteuerung einer elektrischen Maschine, der ein Tretmoment bei einer Winkelgeschwindigkeit mittels einer Tretkurbel zuführbar ist, sowie ein Verfahren zur Ansteuerung einer elektrischen Maschine, der ein Tretmoment bei einer Winkelgeschwindigkeit mittels einer Tretkurbel zuführbar ist, bereitzustellen. Insbesondere zielt die Erfindung darauf ab, ein rundes Tretgefühl hervorzurufen, das dem eines rein mechanischen Antriebs entspricht. Weiter insbesondere kann die Erfindung darauf abzielen, eine robuste sowie steuer- und regelungsarme Lösung bereitzustellen. Ferner kann die Erfindung zur Aufgabe haben, eine auf die menschliche Physiologie angepasste und/oder eine effiziente Ansteuerung zu ermöglichen.

Die Aufgabe wird durch eine Steuereinheit und ein Verfahren mit den Merkmalen der unabhängigen Ansprüche gelöst. Vorteilhafte Weiterbildungen ergeben sich aus den Unteransprüchen, der Beschreibung und den Figuren.

Entsprechend wird eine Steuereinheit zur Ansteuerung einer elektrischen Maschine, der ein Tretmoment bei einer Winkelgeschwindigkeit mittels einer Tretkurbel zuführbar ist, vorgeschlagen. Die elektrische Maschine kann im Bereich der Tretkurbel vorgesehen sein. Die Tretkurbel kann beispielsweise Bestandteil eines Lastenfahrrads, insbesondere eines kettenlosen Lastenfahrrads, oder eines Rollstuhls oder eines Fitnessgeräts sein. An einem freien Ende der Tretkurbel kann ein Pedal vorgesehen sein, auf das eine Muskelkraft einer Nutzerin wirkt. Durch eine kreisförmige Bewegung der Tretkurbel kann das Tretmoment eingeleitet werden. Die Tretkurbel kann sich aus zwei Tretkurbelarmen zusammensetzen, an deren freien Enden jeweils ein Pedal vorgesehen ist. Die der elektrischen Maschine zuführbare Leistung kann sich aus dem Produkt des Tretmoments mit der Winkelgeschwindigkeit ergeben. Die elektrische Maschine kann abhängig von einem Betriebszustand der elektrischen Maschine als Generator oder als Elektromotor fungieren. Der Betriebszustand der elektrischen Maschine kann dem Betriebszustand eines Antriebsstrangs des kettenlosen Lastenfahrrads entsprechen. Der Betriebszustand kann von verschiedenen Faktoren, wie beispielsweise der Winkelgeschwindigkeit der Tretkurbel und/oder einer Nutzereingabe variieren. Die Steuereinheit kann die elektrische Maschine mittels einer Leistungselektronik ansteuern.

Die Steuereinheit weist ein Tretwiderstandsmodul auf, das dazu konfiguriert und angepasst ist, zumindest aus einem Tretparameter eine das Tretmoment unterstützende oder dem Tretmoment entgegenwirkende Tretwiderstandsgröße zu bestimmen, insbesondere einen Tretwiderstandsstrom zu bestimmen, der durch eine elektrische Spule der elektrischen Maschine fließt. Der Tretwiderstandsstrom kann positiv sein, mithin aus der elektrischen Maschine herausfließen und somit dem Tretmoment entgegenwirken, oder negativ sein, mithin in die elektrische Maschine hineinfließen und somit das Tretmoment unterstützen. Insbesondere kann die Tretwiderstandsgröße ausschließlich basierend auf dem Tretparameter bestimmt werden. Der Tretparameter ist ein Parameter, den die Steuereinheit zur Bestimmung der Tretwiderstandsgröße heranzieht. Er kann innerhalb des Tretwiderstandsmoduls basierend auf einer Eingangsgröße, wie beispielsweise der Winkelgeschwindigkeit, dem Tretmoment oder einer einstellbaren Generatorstufe, bestimmt werden oder dem Tretwiderstandsmodul von extern zugeführt werden. Der Tretparameter kann auch konstant sein oder innerhalb der jeweils eingestellten Generatorstufe konstant sein. Das Tretwiderstandsmodul kann eine funktionale Einheit sein, die als Eingangsgröße den Tretparameter oder einen mit diesem korrelierenden Parameter, wie die Winkelgeschwindigkeit oder eine einstellbare Generatorstufe, erhält und hieraus als Ausgangsgröße die Tretwiderstandsgröße bestimmt. Die einstellbare Generatorstufe kann einen Getriebegang simulieren, wie nachstehend näher beschrieben. Die elektrische Spule der elektrischen Maschine kann sich aus mehreren Teilspulen zusammensetzen. Der Strom, der durch die elektrische Spule der elektrischen Maschine fließt, kann ein Magnetfeld hervorrufen, das abhängig von dem Betriebszustand das Tretmoment unterstützt oder diesem entgegenwirkt. Eine Generatorspannung, die in der elektrischen Spule anliegt, kann geringer sein als eine von einer Antriebsbatterieeinheit bereitgestellte Batteriespannung. Der Generatorstrom kann sich somit von einem Batteriestrom unterscheiden. Damit in der elektrischen Spule ein Strom fließen kann, ist ein mechanischer Widerstand der Spule und insbesondere der Leistungselektronik zu überwinden. Eine Ausgangsleistung, die in einem Betriebszustand von der elektrischen Maschine abgegeben wird, kann sich aus dem Produkt der Generatorspannung mit einem Generatorstrom ergeben. Das Verhältnis der Ausgangsleistung und der zugeführten Leistung kann dem Prozesswirkungsgrad der elektrischen Maschine entsprechen. Die Tretwiderstandsgröße, insbesondere der Tretwiderstandsstrom, kann in einem Betriebszustand dem Tretmoment entgegenwirken. Sie kann bei einer Nutzerin somit ein Tretgefühl erzeugen, das sich zumindest teilweise aus einem Tretwiderstand ergibt, wie sie es von einem mechanisch angetriebenen System kennt. Die Tretwiderstandsgröße bildet ein Tretwiderstandsgefühl, das eine Nutzerin bein einem mechanischen Antrieb erfahren würde, ab.

Die Steuereinheit weist ferner ein Trägheitsmodul auf, das dazu konfiguriert und angepasst ist, zumindest aus einer Änderung der Winkelgeschwindigkeit des Pedals eine Trägheitsgröße zu bestimmen, insbesondere einen Trägheitsstrom zu bestimmen, der durch die elektrische Spule der elektrischen Maschine fließt. Insbesondere kann die Trägheitsgröße ausschließlich basierend auf der Änderung der Winkelgeschwindigkeit bestimmt werden. Das Trägheitsmodul kann eine funktionale Einheit sein, die als Eingangsgröße die Änderung der Winkelgeschwindigkeit erhält und hieraus als Ausgangsgröße die Trägheitsgröße bestimmt. Die Trägheitsgröße, insbesondere der Trägheitsstrom, kann in einem Betriebszustand dem Tretmoment entgegenwirken. Sie kann bei einer Nutzerin somit ein Tretgefühl erzeugen, das sich zumindest teilweise aus einer Trägheit ergibt, wie sie es von einem mechanisch angetriebenen System kennt. Die Trägheitsgröße unterscheidet sich in ihrer Bestimmung von der Tretwiderstandsgröße, sodass die Trägheit und der Tretwiderstand getrennt voneinander bestimmbar sind. Selbstverständlich können die Trägheitsgröße und die Tretwiderstandsgröße in einem bestimmten Betriebszustand denselben Betrag und/oder dasselbe Vorzeichen aufweisen. Die Trägheitsgröße bildet ein Trägheitsgefühl, das eine Nutzerin bei einem mechanischen Antrieb erfahren würde, ab.

Die Steuereinheit weist ferner ein Strommodul auf, das dazu konfiguriert und angepasst ist, einen Generatorstrom der elektrischen Maschine basierend auf der Tretwiderstandsgröße und der Trägheitsgröße zu bestimmen, wobei der Generatorstrom insbesondere ausschließlich basierend auf der Tretwiderstandsgröße und der Trägheitsgröße bestimmt ist. Der Generatorstrom beziffert den elektrischen Strom, der abhängig von dem jeweiligen Betriebszustand aus der elektrischen Maschine herausfließt oder in die elektrische Maschine hineinfließt. In letzterem Fall kann der Generatorstrom auch als Elektromotorstrom bezeichnet werden. Der Generatorstrom wird insbesondere basierend auf dem Tretwiderstandsstrom und dem Trägheitsstrom bestimmt. Das Strommodul kann eine funktionale Einheit sein, die als Eingangsgrößen die Tretwiderstandsgröße und die Trägheitsgröße erhält und hieraus als Ausgangsgröße den Generatorstrom bestimmt. Der Generatorstrom bildet das Tretwiderstandsgefühl und das Trägheitsgefühl ab, die eine Nutzerin bei einem mechanischen Antrieb erfahren würde. Der Generatorstrom kann mit einer Antriebsbatterieeinheit kommunizieren, insbesondere unter Zwischenschaltung eines Stromrichters, wie beispielsweise eines Gleichrichters oder eines Umrichters. Ist der Generatorstrom positiv, kann er der Antriebsbatterieeinheit zugeführt werden, ist der negativ, kann er aus der Antriebsbatterieeinheit bezogen werden. Der Generatorstrom kann auch einem elektrischen Antrieb zugeführt werden.

Die Steuereinheit ist somit in der Lage, einen Generatorstrom zu bestimmen, der das Tretwiderstandsgefühl und das Trägheitsgefühl abbildet. Da diese von unterschiedlichen Faktoren abhängen, berücksichtigt das Strommodul sowohl die Tretwiderstandsgröße als auch die Trägheitsgröße. Somit kann aus dem Tretparameter und der Änderung der Winkelgeschwindigkeit ein Generatorstrom bestimmt werden, der in der Spule ein Magnetfeld erzeugt. Dieses wirkt dem Tretmoment derart entgegen, dass eine Nutzerin ein rundes Tretgefühl hat, das dem eines rein mechanischen Antriebs entspricht. Das runde Tretgefühl resultiert insbesondere daraus, dass die Steuereinheit Faktoren, die den Tretwiderstand simulieren, und Faktoren, die Trägheit simulieren, getrennt voneinander berücksichtigt. Dass der Generatorstrom insbesondere ausschließlich basierend auf der Tretwiderstandsgröße und der Trägheitsgröße bestimmbar ist trägt dazu bei, eine robuste sowie steuer- und regelungsarme Lösung bereitzustellen. In der elektrischen Maschine tritt eine reale Trägheit auf, beispielsweise aufgrund der Masse der bei der Kraftübertragung beteiligten Komponenten in der elektrischen Maschine. Die reale Trägheit ist sehr gering. Dadurch, dass der Generatorstrom mit der Änderung der Winkelgeschwindigkeit variiert, ist zusätzlich eine Trägheit simuliert. Die simulierte Trägheit verleiht der Nutzerin zum einen ein reales Tretgefühl. Darüber hinaus passt sie das Verhalten der elektrischen Maschine an die menschliche Physiologie an. Denn an einem oberen Totpunkt, mithin bei 0° bzw. 360° der kreisförmigen Bewegung der Tretkurbel, sowie an einem unteren Totpunkt, mithin bei 180° der kreisförmigen Bewegung der Tretkurbel, ist das Tretmoment physiologisch bedingt sehr gering verglichen mit dem Tretmoment bei 90° und 270° der kreisförmigen Bewegung der Tretkurbel. Die simulierte Trägheit kann dazu beitragen, dass sich die Tretkurbel an dem oberen Totpunkt und dem unteren Totpunkt bewegt, ohne dass ein Tretmoment erforderlich wäre.

Wenn ein Mensch ein Tretmoment auf die Pedale der Tretkurbel ausübt, variiert die eingebrachte Energie in der Regel. Zunächst kann eine zugeführte Tretkraft beispielsweise davon abhängen, ob die Nutzerin schneller oder langsamer fahren möchte und entsprechend mehr oder weniger Tretkraftraft auf die Pedale ausübt. Noch dazu bedingt die menschliche Physiologie eine niederfrequente doppelte Wellenform pro Pedalumdrehung, weil der Mensch physiologisch nicht in der Lage ist, ein gleichmäßiges Tretmoment über die gesamte Pedalumdrehung zu erzeugen. Die offenbarungsgemäße Steuereinheit ermöglicht bei einem solchen Tretverhalten folgenden Anwendungsfall: In einem Ausgangspunkt ist die Tretkurbel bei 90° im Stillstand positioniert. Die Winkelgeschwindigkeit beträgt zunächst null. Jetzt tritt eine Nutzerin in die Pedale und erzeugt somit ein Tretmoment. Damit die elektrische Maschine anlaufen kann, ist zunächst deren mechanischer Widerstand, etwa der Widerstand der Spule sowie der Leistungselektronik, zu überwinden. Ist der Widerstand der elektrischen Maschine überwunden und bewegt sich die Tretkurbel mit einer gewissen Winkelgeschwindigkeit, wird das Tretmoment der Nutzerin bei der gewissen Winkelgeschwindigkeit von der elektrischen Maschine in Strom gewandelt, der die elektrische Maschine verlässt, sodass der Generatorstrom nun positiv ist. Dem Tretmoment der Nutzerin wirken in der elektrischen Maschine ein Tretwiderstandsmoment und, sofern die Änderung der Winkelgeschwindigkeit ungleich null ist, ein Trägheitsmoment entgegen. Das Tretwiderstandsmoment korreliert mit dem Tretwiderstandsstrom, der sich aus dem Tretparameter ergibt. Das Trägheitsmoment korreliert mit dem Trägheitsstrom, der sich aus der Änderung der Winkelgeschwindigkeit ergibt. Kommt die Tretkurbel nun beispielsweise bei 180° an, ist das von der Nutzerin erzeugte Tretmoment physiologisch bedingt sehr gering oder sogar null. Mit dem abnehmenden Tretmoment hat sich die Winkelgeschwindigkeit verringert. Die Verringerung der Winkelgeschwindigkeit bedingt einen Trägheitsstrom, der der elektrischen Maschine zugeführt wird. Der Trägheitsstrom wirkt in dieser Situation in die andere Richtung als der Tretwiderstandsstrom. Abhängig davon, wie groß der Trägheitsstrom und der Tretwiderstandsstrom sind, kann der Generatorstrom die elektrische Maschine verlassen, also positiv sein, oder der elektrischen Maschine zugeführt werden, also negativ sein. Dadurch, dass der elektrischen Maschine der Trägheitsstrom zugeführt wird, kann die Tretkurbel auch bei ausbleibenden Tretmoment über den unteren Totpunkt hinwegbewegt werden. Der zugeführte Trägheitsstrom simuliert somit eine in einem mechanischen System tatsächlich auftretende Trägheit und optimiert die Tretkurbel physiologisch. Die Steuereinheit kann somit darauf verzichten, ein eingebrachtes Tretmoment in einen die elektrische Maschine verlassenden Strom zu wandeln, um stattdessen die Trägheit realistisch abzubilden. Der thermische Wirkungsgrad der elektrischen Maschine kann somit herabgesetzt werden, um das runde Tretgefühl hervorzurufen. Wenn die Nutzerin beispielsweise aufhört zu treten und somit kein Tretmoment mehr erzeugt, kann der Generatorstrom von der positiven Richtung aus der elektrischen Maschine hinaus in die negative Richtung in die elektrische Maschine hinein umschlagen, um die Trägheit realitätstreu zu simulieren.

In einer Ausführungsform ist der Tretparameter zumindest teilweise aus der Winkelgeschwindigkeit bestimmt, insbesondere entspricht er der Winkelgeschwindigkeit. Alternativ oder begleitend ist der Tretparameter zumindest teilweise aus einer Generatorstufe, die der Steuereinheit von einem Nutzer mitteilbar ist, bestimmt. Der Tretparameter kann innerhalb des Tretwiderstandsmoduls bestimmt werden. Er kann beispielsweise proportional zur Winkelgeschwindigkeit sein. Alternativ oder begleitend kann der Tretparameter eine Generatorstufe berücksichtigen, die der Steuereinheit von einer Nutzerin mitteilbar ist. Die Generatorstufe kann einen Getriebegang, den die Nutzerin der Steuereinheit vorgibt, simulieren. In einem ersten Gang ist der Tretparameter beispielsweise dergestalt, dass der resultierende Tretwiderstandsstrom geringer ist als in dem zweiten Gang, wo er wiederum kleiner ist als in einem dritten Gang und so weiter. So kann die Steuereinheit einer Nutzerin gegenüber den Eindruck verschiedener Gänge erwecken. Der Tretparameter kann beispielsweise zum einen von dem jeweiligen Gang, mithin der jeweiligen Generatorstufe, zum anderen von der Winkelgeschwindigkeit abhängen. Der Zusammenhang zwischen der Winkelgeschwindigkeit und dem Tretparameter kann linear oder progressiv sein. In einer einfachen Ausführungsform ist der Tretparameter unabhängig von der Winkelgeschwindigkeit und wird ausschließlich aus der aus wählbaren Getriebestufe bestimmt.

In einer Ausführungsform bestimmt das Strommodul den Generatorstrom, indem das Strommodul zur Bestimmung des Generatorstroms den Tretwiderstandsstrom und den Trägheitsstrom richtungsabhängig addiert. Die richtungsabhängige Addition berücksichtigt, ob der jeweilige Strom positiv oder negativ ist. So lässt sich der Generatorstrom, der die elektrische Maschine verlässt, mittels eines Summenbilders bestimmen. Durch die Addition trägt das Strommodul zu einer steuer- und regelungsarmen Lösung bei.

In einer Ausführungsform ist der Tretwiderstandsstrom oberhalb eines Schwellwertes der Winkelgeschwindigkeit und des Tretmoments positiv und fließt aus der elektrischen Maschine heraus, während der Tretwiderstandsstrom unterhalb des Schwellwertes der Winkelgeschwindigkeit und des Tretmoments negativ ist und in die elektrische Maschine hineinfließt. Somit ist die Steuereinheit dazu angepasst, den Tretwiderstandsstrom und den hiervon beeinflussten Generatorstrom entsprechend der inneren Widerstände der elektrischen Maschine zu steuern. Der Schwellwert der Winkelgeschwindigkeit und des Tretmoments kann kleiner als 45° pro Sekunde und Newtonmeter sein. Die Steuereinheit ist somit in der Lage schon bei geringen Schwellwert einen positiven Tretwiderstandsstrom zu bestimmen.

In einer Ausführungsform ist der Trägheitsstrom bei einer Zunahme der Winkelgeschwindigkeit positiv bestimmt und fließt aus der elektrischen Maschine heraus. Alternativ oder begleitend ist der Trägheitsstrom bei einer Abnahme der Winkelgeschwindigkeit negativ bestimmt und fließt in die elektrische Maschine hinein. Der Trägheitsstrom wird bei der Zunahme der Winkelgeschwindigkeit positiv bestimmt, damit ein der Winkelgeschwindigkeit entgegengesetztes Trägheitsmoment erzeugt ist, das dem Tretmoment entgegenwirkt und einen Stromfluss aus der elektrischen Maschine heraus induziert. Der Trägheitsstrom wird bei der Abnahme der Winkelgeschwindigkeit negativ bestimmt, damit ein in der Richtung der Winkelgeschwindigkeit wirkendes Trägheitsmoment erzeugt ist, das das Tretmoment unterstützt und einen Stromfluss in die elektrische Maschine hinein induziert. Dies trägt zu einem runden und realitätstreuen Tretgefühl bei.

In einer Ausführungsform wird die elektrische Maschine in einem Zustand, in dem ein Betrag des negativen Trägheitsstroms größer ist als ein Betrag des Tretwiderstandsstroms, derart angesteuert, dass sie als Elektromotor fungiert, sich also in einem Motorbetrieb befindet. Die Steuereinheit kann die elektrische Maschine entsprechend der in dem Strommodul durchgeführten Bestimmung derart ansteuern, dass von einer Antriebsbatterieeinheit Strom bezogen wird und ein das Tretmoment unterstützende Moment von der elektrischen Maschine ausgeübt wird.

In einer Ausführungsform wird die elektrische Maschine in einem Zustand, in dem ein Betrag des Trägheitsstroms kleiner ist als ein Betrag des positiven Tretwiderstandsstroms, derart angesteuert, dass sie als Generator fungiert, sich also in einem Generatorbetrieb befindet. Die Steuereinheit kann die elektrische Maschine entsprechend der in dem Strommodul durchgeführten Bestimmung derart ansteuern, dass ein Zwischenkreis und eine Antriebsbatterieeinheit mit Strom gespeist wird, sodass ein dem Tretmoment entgegenwirken des Moment von der elektrischen Maschine ausgeübt wird. Der Tretwiderstandsstrom ist positiv, sobald er oberhalb des Schwellwertes der Winkelgeschwindigkeit und des Tretmoments liegt. Ist sein Betrag größer als der des Trägheitsstroms, unabhängig davon, ob dieser ein unterstützende oder entgegenwirken des Trägheitsmoment erzeugt, wird die elektrische Maschine derart angesteuert, dass sie Strom erzeugt und somit als Generator fungiert.

In einer Ausführungsform unterliegt die Steuereinheit einer Taktung, bei der der elektrischen Maschine Steuerbefehle übermittelbar sind, wobei die Taktung zwischen 100 Hz und 40 kHz, insbesondere zwischen 200 Hz und 3 kHz liegt. Die Steuerbefehle von der Steuereinheit an die elektrische Maschine können über eine Leistungselektronik, die unmittelbar mit der Spule der elektrischen Maschine verbunden sein kann, übermittelt werden. Durch die hochfrequente Taktung, die bevorzugt zwischen 1 kHz und 3 kHz liegt, ist gewährleistet, dass die elektrische Maschine im Millisekundenbereich an variierende Umgebungsbedingungen anpassbar ist. Insbesondere für das aufgrund der menschlichen Physiologie variierende Tretmoment mit fortschreitender Winkelgeschwindigkeit kann die hochfrequente Taktung dazu beitragen, das runde Tretgefühl hervorzurufen und eine auf die menschliche Physiologie angepasste sowie effiziente Ansteuerung zu ermöglichen.

In einer Ausführungsform ist die Steuereinheit ein eigenständiges System, das eine Leistungselektronik enthält und das autark, insbesondere ohne weitere Steuerbefehle von anderen Steuergeräten, auf Basis des Tretparameters und der Änderung der Winkelgeschwindigkeit in der Lage ist, der elektrischen Maschine Steuerbefehle zu übermitteln. Die Steuereinheit kann somit einen Regelkreis haben, der sich auf die elektrische Maschine beschränkt. Dies reduziert die Abhängigkeiten der Steuereinheit von anderen Einflussgrößen, was zu einer steuer- und regelungsarmen Lösung beiträgt und eine robuste Steuereinheit bereitstellt.

In einer Ausführungsform zieht das Trägheitsmodul neben der Änderung der Winkelgeschwindigkeit einen Trägheitsparameter heran, um den Trägheitsstrom zu bestimmen, wobei der Trägheitsparameter insbesondere zumindest teilweise von einer bzw. der Generatorstufe, die der Steuereinheit von einem Nutzer mitteilbar ist, bestimmt ist. Der Trägheitsparameter kann ebenso wie die Änderung der Winkelgeschwindigkeit richtungsabhängig sein. Somit ist eine Drehrichtung der Tretkurbel sowie eine Fahrtrichtung des kettenlosen Lastenfahrrads bei der Bestimmung des Trägheitsstroms berücksichtigt. Der Trägheitsparameter kann innerhalb des Trägheitsmodul bestimmt werden. Die Generatorstufe kann einen Getriebegang, den die Nutzerin der Steuereinheit vorgibt, simulieren, wie vorstehend beschrieben. Der Tretparameter kann beispielsweise zum einen von dem jeweiligen Gang, mithin der jeweiligen Generatorstufe, zum anderen von der Änderung der Winkelgeschwindigkeit abhängen. Der Zusammenhang zwischen der Änderung der Winkelgeschwindigkeit und dem Trägheitsparameter kann linear oder progressiv sein. In einer einfachen Ausführungsform ist der Trägheitsparameter unabhängig von der Generatorstufe und wird ausschließlich aus der Änderung der Winkelgeschwindigkeit bestimmt.

In einer Ausführungsform ist die Steuereinheit dazu konfiguriert und angepasst, die elektrische Maschine derart anzusteuern, dass der Trägheitsstrom durch dieselbe Spule der elektrischen Maschine fließt, wie der Tretwiderstandsstrom. Die Spule der elektrischen Maschine kann sich aus mehreren Teilspulen zusammensetzen. Aus dem Trägheitsstrom und dem Tretwiderstandsstrom wird der Generatorstrom bestimmt. Dadurch, dass beide durch dieselbe Spule fließen, kann der bestimmte Generatorstrom effizient durch die elektrische Maschine geleitet werden.

In einer Ausführungsform ist das Trägheitsmodul dazu konfiguriert und angepasst, bei Erhalt eines Auflösesignals den Trägheitsstrom bei einer Änderung der Winkelgeschwindigkeit auf null zu setzen. Das Auflösesignal kann davon ausgelöst werden, dass die elektrische Maschine von dem Generatorbetrieb in den Motorbetrieb wechselt, wie vorstehend beschrieben. Sobald die elektrische Maschine zurück in den Generatorbetrieb wechselt, kann das Auflösesignal aufgehoben werden. Der Generatorstrom kann nach Erhalt des Auflösesignals dem Tretwiderstandsstrom entsprechen. Das Auflösesignal kann von der Leistungselektronik der elektrischen Maschine erkannt werden.

In einer Ausführungsform wird das Auflösesignal von einer negativen Winkelgeschwindigkeit und/oder von einem Zustand in dem das Pedal keinen Kontakt zu einer Nutzerin hat, ausgelöst. Die negative Winkelgeschwindigkeit kann daraus resultieren, dass die Nutzerin rückwärts tritt. In diesem Fall kann die simulierte Trägheit nachteilhaft sein, sodass sie durch das Auflösesignal und den hiervon auf null gesetzten Trägheitsstrom aufgelöst ist. Die Steuereinheit kann ferner ein Signal erhalten, dass die Nutzerin die Pedale nicht mehr berührt. In diesem Fall ist die Abbildung eines realen Tretgefühls hinfällig. Folglich kann die Steuereinheit darauf verzichten, die Trägheitsgröße in den Generatorstrom mit einfließen zu lassen.

In einer Ausführungsform ist die Steuereinheit dazu konfiguriert und angepasst, basierend auf der Winkelgeschwindigkeit und/oder dem Tretmoment ein Steuersignal zu bestimmen, welches einem elektrischen Antrieb bereitgestellt ist. Insbesondere kann das Steuersignal dem elektrischen Antrieb anzeigen, wie viel Leistung er aus der Antriebsbatterieeinheit bezieht. Dies trägt zu einem effizienten und kettenfreien Antrieb bei.

In einer Ausführungsform betrifft die Offenbarung ein System, insbesondere ein kettenloses Lastenfahrrad, das eine offenbarungsgemäße Steuereinheit, die offenbarungsgemäße elektrische Maschine und eine Antriebsbatterieeinheit, die mit der elektrischen Maschine elektrisch verbunden ist, aufweist. Die Steuereinheit ist dazu angepasst und konfiguriert, bei einer ersten Bestimmung durch das Strommodul, insbesondere, wenn der positive Tretwiderstandsstrom größer ist als der Trägheitsstrom, den Generatorstrom von der elektrischen Maschine zur Antriebsbatterieeinheit fließen zu lassen und bei einer zweiten Bestimmung durch das Strommodul, insbesondere, wenn der Tretwiderstandsstrom kleiner ist als der negative Trägheitsstrom, den Generatorstrom von der Antriebsbatterieeinheit zur elektrischen Maschine fließen zu lassen. Das System trägt zu einem runden und realitätsgetreuen Tretgefühl bei. Es kann die elektrische Maschine abhängig von den jeweiligen Umgebungsbedingungen variabel als Generator oder als Elektromotor einsetzen. Dabei können Wirkungsgradeinbußungen in Kauf genommen werden, um das Tretgefühl möglichst real zu gestalten.

In einer Ausführungsform hat das System einen elektrischen Antrieb, der dazu konfiguriert und angepasst ist, das System, insbesondere das kettenlose Lastenfahrrad, anzutreiben, wobei der elektrische Antrieb mit der elektrischen Maschine und/oder der Antriebsbatterieeinheit verbunden ist. Die elektrische Maschine, die Antriebsbatterieeinheit und der elektrische Antrieb können mittels eines Zwischenkreis miteinander verbunden sein. Der elektrische Antrieb kann sicherstellen, dass das System komfortabel, unter Aufbringung keiner oder nur einer sehr geringen Muskelkraft antreibbar ist.

Die Offenbarung betrifft ferner ein Verfahren zur Ansteuerung einer elektrischen Maschine, der ein Tretmoment bei einer Winkelgeschwindigkeit mittels einer Tretkurbel zuführbar ist. Das Verfahren weist den Schritt des Erhaltens eines Tretparameters und des Bestimmens einer Tretwiderstandsgröße basierend auf dem Tretparameter auf. Dieser Schritt kann von dem Tretwiderstandsmodul durchgeführt werden. Das Verfahren weist ferner den Schritt des Erhaltens einer Änderung einer Winkelgeschwindigkeit des Pedals und des Bestimmens der Trägheitsgröße basierend auf der Änderung der Winkelgeschwindigkeit des Pedals auf. Dieser Schritt kann von dem Trägheitsmodul durchgeführt werden. Das Verfahren weist ferner den Schritt des Bestimmens eines Generatorstroms der elektrischen Maschine basierend auf der Tretwiderstandsgröße und der Trägheitsgröße auf. Bei der Tretwiderstandsgröße kann es sich um den Tretwiderstandsstrom, bei der Trägheitsgröße um den Trägheitsstrom handeln. Die vorstehend im Zusammenhang mit der Steuereinheit offenbarten Merkmale, Effekte und Vorteile treffen, soweit anwendbar, auf das Verfahren zu.

In einer Ausführungsform weist das Verfahren ferner den Schritt des Erhaltens eines Auflösesignals und des Bestimmens des Generatorstroms unter Berücksichtigung des Auflösesignals auf. Das Auflösesignal kann davon ausgelöst werden, dass die elektrische Maschine von dem Generatorbetrieb in den Motorbetrieb wechselt, wie vorstehend beschrieben. Sobald die elektrische Maschine zurück in den Generatorbetrieb wechselt, kann das Auflösesignal aufgehoben werden. Der Generatorstrom kann nach Erhalt des Auflösesignals dem Tretwiderstandsstrom entsprechen. In einer Ausführungsform wird das Auflösesignal von einer negativen Winkelgeschwindigkeit und/oder von einem Zustand in dem das Pedal keinen Kontakt zu einer Nutzerin hat, ausgelöst. Die negative Winkelgeschwindigkeit kann daraus resultieren, dass die Nutzerin rückwärts tritt. In diesem Fall kann die simulierte Trägheit nachteilhaft sein, sodass sie durch das Auflösesignal und den hiervon auf null gesetzten Trägheitsstrom aufgelöst ist. Die Steuereinheit kann ferner ein Signal erhalten, dass die Nutzerin die Pedale nicht mehr berührt. In diesem Fall ist die Abbildung eines realen Tretgefühls hinfällig. Folglich kann die Steuereinheit darauf verzichten, die Trägheitsgröße in den Generatorstrom mit einfließen zu lassen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Ansicht eines Lastenfahrrads;
- Figur 2: eine schematische Ansicht einer Generatoreinheit sowie die eingehenden und ausgehenden Ströme;
- Figur 3: eine schematische Ansicht zur Bestimmung eines Generatorstroms;
- Figur 4: eine schematische Ansicht eines Antriebsstrangs; und
- Figur 5: einen schematischen Zusammenhang zwischen einem Tretmoment und einer Position einer Tretkurbel.

### Detaillierte Beschreibung bevorzugter Ausführungsbeispiele

Im Folgenden werden Ausführungsbeispiele unter Bezugnahme auf die Figuren beschrieben. Dabei werden gleiche, ähnliche oder gleichwirkende Elemente in den unterschiedlichen Figuren mit identischen Bezugszeichen versehen.

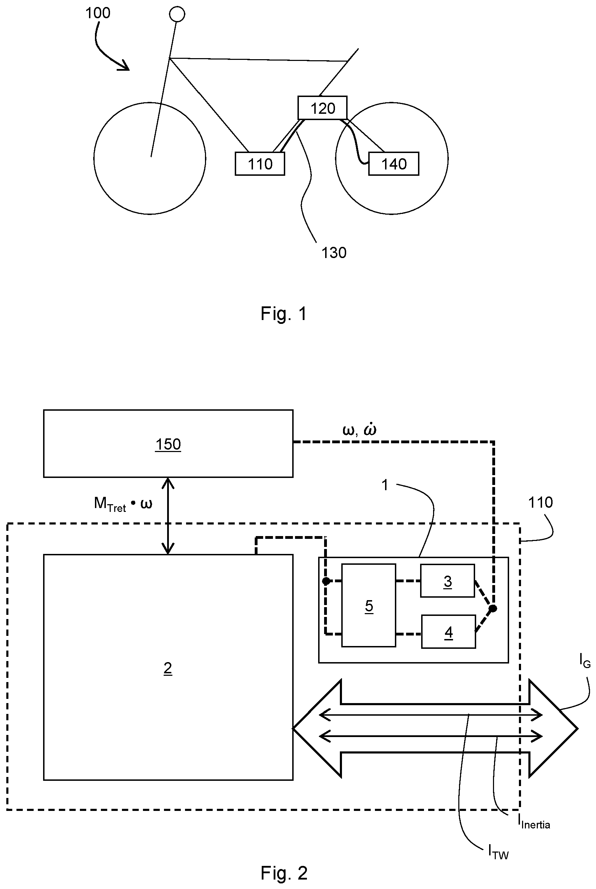

Figur 1 zeigt schematisch ein kettenloses Lastenfahrrad 100. Das Lastenfahrrad 100 ist dazu ausgelegt, Lasten von beispielsweise mehreren hundert Kilogramm zu transportieren. Im Bereich einer Tretkurbel ist eine Generatoreinheit 110 angebracht, die eine Steuereinheit 1 und eine elektrische Maschine 2 aufweist. Die Generatoreinheit 110 kann eine von einer Nutzerin über die Tretkurbel eingebrachte Tretleistung in elektrischen Strom wandeln, den sie einer Antriebsbatterieeinheit 120 über ein Kabel 130 zuführt. Die Generatoreinheit 110 kann von der Antriebsbatterieeinheit 120 ferner einen Strom beziehen, um die Tretkurbel anzutreiben und somit als Elektromotor zu fungieren. Die Antriebsbatterieeinheit 120 ist ferner mit einem elektrischen Antrieb 140 gekoppelt, der dazu konfiguriert und angepasst ist das kettenlose Lastenfahrrad 100 anzutreiben.

Figur 2 zeigt schematisch die Generatoreinheit 110 und ihre Verbindung zu einer Momenteneinheit 150. Die Generatoreinheit 110 weist die Steuereinheit 1 und die elektrische Maschine 2 auf. Die Momenteneinheit 150 kann eine Tretkurbel mit einem Pedal aufweisen, die mit einer Welle der elektrischen Maschine 2 in Verbindung steht. Über das Pedal und die Tretkurbel kann eine Nutzerin der Momenteneinheit 150 ein Tretmoment M_{Tret} bei einer Winkelgeschwindigkeit ω zuführen. Die Momenteneinheit 150 gibt die Leistung, die sich aus dem Produkt des Tretmoments M_{Tret} mit der Winkelgeschwindigkeit ω zusammensetzen kann, an die elektrische Maschine 2 weiter, die in diesem Fall als Generator fungiert. Ferner kann die Momenteneinheit 150 von der elektrischen Maschine 2 angetrieben werden, in welchem Fall die elektrische Maschine 2 als Elektromotor fungiert.

Die Steuereinheit 1 empfängt von der Momenteneinheit 150 ein Eingangssignal. Beispielsweise kann die Steuereinheit 1 die Winkelgeschwindigkeit ω sowie eine zeitliche Änderung *ω̇* der Winkelgeschwindigkeit erhalten. Die Winkelgeschwindigkeit ω kann einem Tretwiderstandsmodul 3 zugeführt werden, das beispielsweise hieraus und wahlweise aus weiteren Parametern einen Tretparameter k_{TW} und/oder die Tretwiderstandsgröße bestimmt. Der Tretparameter kann konstant sein und von einer Nutzerin ausgewählt werden. Aus dem Tretparameter k_{TW} kann das Tretwiderstandsmodul 3 eine Tretwiderstandsgröße bestimmen. Bei der Tretwiderstandsgröße kann es sich beispielsweise um einen Tretwiderstandsstrom I_{TW} handeln. Der Tretwiderstandsstrom I_{TW} wird einem Strommodul 5 als Eingangsgröße zugeführt. Die Änderung der Winkelgeschwindigkeit kann einem Trägheitsmodul zugeführt werden, das hieraus und wahlweise aus weiteren Parametern eine Trägheitsgröße bestimmt. Bei der Trägheitsgröße kann es sich beispielsweise um einen Trägheitsstrom I_{Inertia} handeln. Der Trägheitsstrom I_{Inertia} wird dem Strommodul 5 als weitere Eingangsgröße zugeführt das Strommodul 5 kann aus dem Tretwiderstandsstrom I_{TW} und dem Trägheitsstrom I_{Inertia} einen Generatorstrom I_{G} bestimmen. Beispielsweise kann das Strommodul 5 den Tretwiderstandsstrom I_{TW} und den Trägheitsstrom I_{Inertia} richtungsabhängig, also unter Beachtung ihrer Vorzeichen, addieren, um den Generatorstrom I_{G} zu erhalten. Dadurch, dass sowohl die Winkelgeschwindigkeit ω als auch deren zeitliche Änderung berücksichtigt werden, um den Generatorstrom I_{G} zu bestimmen, kann die Steuereinheit 1 sowohl einen Tretwiderstand als auch eine Trägheit eines mechanischen Systems realitätstreu simulieren.

Die Steuereinheit 1 kann der elektrischen Maschine 2 den Generatorstrom I_{G} vorgeben. Beispielsweise kann eine Leistungselektronik der Steuereinheit 1 unmittelbar den in einer Spule der elektrischen Maschine 2 fließenden Strom bestimmen, insbesondere einregeln. Abhängig von den jeweiligen Werten der Tretwiderstandsgröße und der Trägheitsgröße kann der Generatorstrom I_{G} positiv sein, also aus der elektrischen Maschine 2 herausfließen, beispielsweise in die Antriebsbatterieeinheit 120, oder negativ sein, also in die elektrische Maschine 2 hineinfließt, beispielsweise aus der Antriebsbatterieeinheit 120.

Betrachten wir folgenden Anwendungsfall: In einem Ausgangspunkt ist die Tretkurbel bei 90° im Stillstand positioniert. Die Winkelgeschwindigkeit ω beträgt zunächst null. Jetzt tritt eine Nutzerin in die Pedale und erzeugt somit ein Tretmoment M_{Tret}. Damit die elektrische Maschine 2 anlaufen kann, ist zunächst deren elektrischer Widerstand, etwa der elektrische Widerstand der Spule sowie der Leistungselektronik, zu überwinden. Ist der elektrische Widerstand der elektrischen Maschine 2 überwunden und bewegt sich die Tretkurbel mit einer gewissen Winkelgeschwindigkeit ω1, wird das Tretmoment M_{Tret} der Nutzerin bei der gewissen Winkelgeschwindigkeit ω1von der elektrischen Maschine 2 in Strom gewandelt, der die elektrische Maschine 2 verlässt, sodass der Generatorstrom I_{G} nun positiv ist. Dem Tretmoment M_{Tret} der Nutzerin wirken in der elektrischen Maschine 2 ein Tretwiderstandsmoment M_{TW} und, sofern die Änderung der Winkelgeschwindigkeit ungleich null ist, ein Trägheitsmoment M_{Inertia} entgegen. Das Tretwiderstandsmoment M_{TW} korreliert mit dem Tretwiderstandsstrom I_{TW}, der sich aus dem Tretparameter k_{TW} ergibt. Das Trägheitsmoment M_{Inertia} korreliert mit dem Trägheitsstrom I_{Inertia}, der sich aus der Änderung der Winkelgeschwindigkeit ω ergibt. Kommt die Tretkurbel nun beispielsweise bei 180° an, ist das von der Nutzerin erzeugte Tretmoment physiologisch bedingt sehr gering oder sogar null. Mit dem abnehmenden Tretmoment M_{Tret} hat sich die Winkelgeschwindigkeit ω verringert. Die Verringerung der Winkelgeschwindigkeit ω bedingt einen Trägheitsstrom I_{Inertia}, der der elektrischen Maschine 2 zugeführt wird. Der Trägheitsstrom I_{Inertia} wirkt in dieser Situation in die andere Richtung als der Tretwiderstandsstrom I_{TW}. Abhängig davon, wie groß der Trägheitsstrom I_{Inertia} und der Tretwiderstandsstrom I_{TW} sind, kann der Generatorstrom I_{G} die elektrische Maschine 2 verlassen, also positiv sein, oder der elektrischen Maschine 2 zugeführt werden, also negativ sein. Dadurch, dass der elektrischen Maschine 2 der Trägheitsstrom I_{Inertia} zugeführt wird, kann die Tretkurbel auch bei ausbleibenden Tretmoment M_{Tret} über den unteren Totpunkt hinwegbewegt werden. Der zugeführte Trägheitsstrom I_{Inertia} simuliert somit eine in einem mechanischen System tatsächlich auftretende Trägheit und optimiert die Tretkurbel physiologisch. Die Steuereinheit 1 kann somit darauf verzichten, ein eingebrachtes Tretmoment M_{Tret} in einen die elektrische Maschine 2 verlassenden Strom zu wandeln, um stattdessen die Trägheit realistisch abzubilden. Der thermische Wirkungsgrad der elektrischen Maschine 2 kann somit herabgesetzt werden, um das runde Tretgefühl hervorzurufen. Wenn die Nutzerin beispielsweise aufhört zu treten und somit kein Tretmoment M_{Tret} mehr erzeugt, kann der Generatorstrom I_{G} von der positiven Richtung aus der elektrischen Maschine 2 hinaus in die negative Richtung in die elektrische Maschine 2 hinein umschlagen, um die Trägheit realitätstreu zu simulieren.

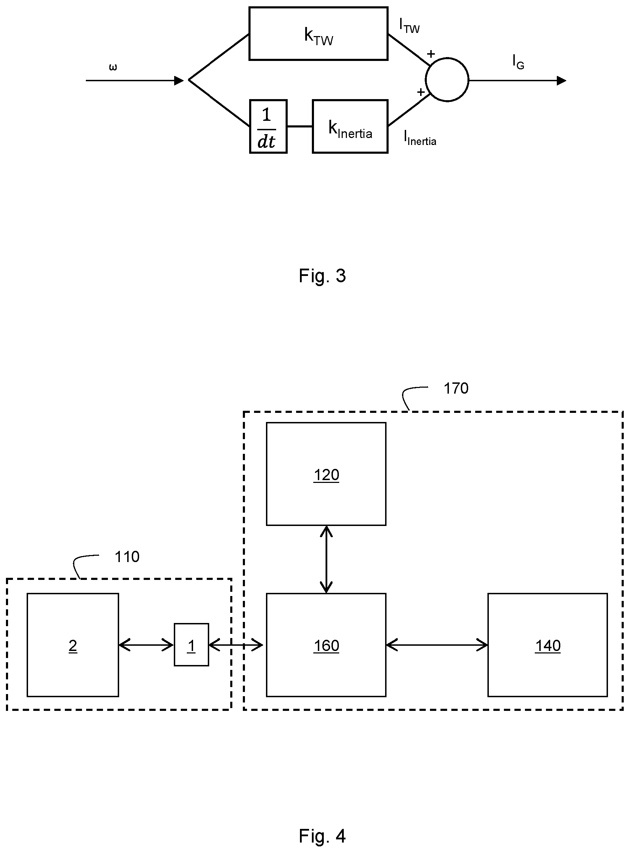

Figur 3 zeigt schematisch die Bestimmung des Tretwiderstandsstroms I_{TW} und des Trägheitsstroms I_{Inertia}. Der Tretwiderstandsstrom I_{TW} wird mithilfe des Tretparameters k_{TW} bestimmt. Der Tretparameter k_{TW} kann aus der Winkelgeschwindigkeit ω bestimmt werden, beispielsweise über einen linearen oder einen progressiven Zusammenhang zwischen der Winkelgeschwindigkeit ω und dem Tretparameter k_{TW}. Der Tretparameter k_{TW} kann auch der Winkelgeschwindigkeit ω entsprechen. Der Tretparameter k_{TW} kann ferner von einer Generatorstufe abhängen. Beispielsweise kann eine Nutzerin der Steuereinheit 1 mitteilen, in welchem Gang die elektrische Maschine 2 zu betreiben ist und insofern eine Generatorstufe vorgeben. In einem ersten Gang ist der Tretparameter k_{TW} am geringsten, mit steigender Ganganzahl steigt der Wert des Tretparameters k_{TW}. Beispielsweise kann die Nutzerin drei bis sieben, insbesondere fünf Generatorstufen vorgeben. Innerhalb jeder Generatorstufe kann der Tretparameter k_{TW} wiederum von der Winkelgeschwindigkeit abhängen. Der Trägheitsstrom I_{Inertia} wird mithilfe der zeitlichen Änderung der Winkelgeschwindigkeit sowie wahlweise über einen Trägheitsparameter k_{Inertia} bestimmt. Auch der Trägheitsparameter k_{Inertia} kann von der jeweiligen Generatorstufe abhängen.

Sobald der Tretwiderstandsstrom I_{TW} und der Trägheitsstrom I_{Inertia} bestimmt sind, werden diese über einen Summenbilder aufaddiert, um den Generatorstrom I_{G} zu erhalten. Bei einer Beschleunigung der Winkelgeschwindigkeit ist der Trägheitsstrom I_{Inertia} positiv. Bei einer Verlangsamung der Winkelgeschwindigkeit ist der Trägheitsstrom I_{Inertia} negativ. Der Tretwiderstandsstrom I_{TW} ist in der Regel positiv. Insbesondere bei geringen Drehzahlen, also in einem Anfahrzustand, kann der Tretwiderstandsstrom I_{TW} auch negativ sein. Der Tretwiderstandsstrom I_{TW} und der Trägheitsstrom I_{Inertia} werden richtungsabhängig, d. h. mit ihren jeweiligen Vorzeichen, addiert. Ist die Summe positiv, dient die elektrische Maschine 2 als Generator, ist die Summe negativ, dient die elektrische Maschine 2 als Elektromotor.

Figur 4 zeigt einen Antriebsstrang mit der Generatoreinheit 110, die einen Ausgangsstrom, der abhängig von dem jeweiligen Generatorstrom I_{G} ist, an einen Zwischenkreis 160 als Stromkreis zur elektrischen Verbindung des Antriebsstrangs liefert. An den Zwischenkreis 160 ist die Antriebsbatterieeinheit 120 sowie der elektrische Antrieb 140 angeschlossen. Die Antriebsbatterieeinheit 120, der Zwischenkreis 160 sowie der elektrische Antrieb 140 werden von einem zentralen Steuergerät 170 gesteuert. Dieses ist separat von der Steuereinheit 1 ausgebildet. In einer alternativen, nicht dargestellten Ausführungsform ist die Steuereinheit 1 Bestandteil des zentralen Steuergeräts 170.

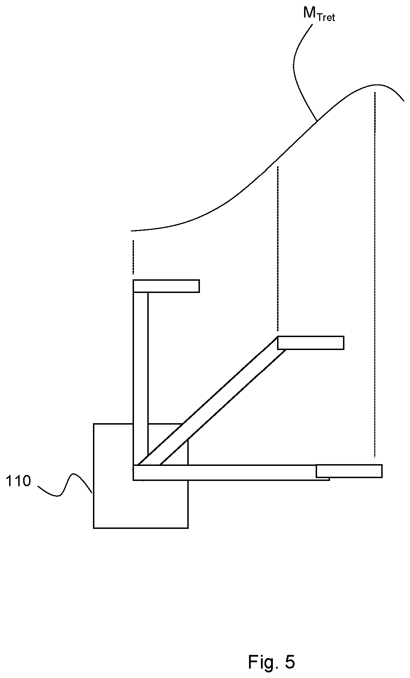

Figur 5 zeigt einen Abschnitt eines typischen Verlaufs des Tretmoments M_{Tret} in Abhängigkeit der Position der Tretkurbel. Ist die Tretkurbel bei 0°, ist das Tretmoment M_{Tret} minimal. Bis zur Position von 90° steigt das Tretmoment M_{Tret} wellenförmig an. Sobald das Maximum bei 90° erreicht ist, nimmt das Tretmoment M_{Tret} bis zur Position bei 180° wieder ab. Eine Pedalumdrehung um 360° unterliegt somit einer niederfrequenten doppelten Wellenform. Bei jeder Pedalumdrehung wirkt bei einem mechanischen System eine Trägheit auf die Tretkurbel, weil das Tretmoment M_{Tret} bei einer ständig variierenden Winkelgeschwindigkeit aufgebracht wird. Dieses Verhalten kann das offenbarungsgemäße Steuergerät realitätsgetreu nachbilden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Steuereinheit
- 2: elektrische Maschine
- 3: Tretwiderstandsmodul
- 4: Trägheitsmodul
- 5: Strommodul

- 100: kettenloses Lastenfahrrad
- 110: Generatoreinheit
- 120: Antriebsbatterieeinheit
- 130: elektrisches Kabel
- 140: elektrische Antrieb
- 150: Momenteneinheit
- 160: Zwischenkreis
- 170: zentrales Steuergerät

- ω: Winkelgeschwindigkeit
- M_{Tret}: Tretmoment
- k_{TW}: Tretparameter
- I_{TW}: Tretwiderstandsstrom
- k_{Inertia}: Trägheitsparameter
- I_{Inertia}: Trägheitsstrom

## Patentansprüche

1. Steuereinheit (1) zur Ansteuerung einer elektrischen Maschine (2), der ein Tretmoment (M_{Tret}) bei einer Winkelgeschwindigkeit (ω) mittels einer Tretkurbel zuführbar ist, aufweisend:
- ein Tretwiderstandsmodul (3), das dazu konfiguriert und angepasst ist, aus einem Tretparameter (k_{TW}) eine das Tretmoment (M_{Tret}) unterstützende oder dem Tretmoment (M_{Tret}) entgegenwirkende Tretwiderstandsgröße zu bestimmen, insbesondere einen Tretwiderstandsstrom (I_{TW}) zu bestimmen, der durch eine elektrische Spule der elektrischen Maschine (2) fließt;
- ein Trägheitsmodul (4), das dazu konfiguriert und angepasst ist, aus einer Änderung der Winkelgeschwindigkeit (ω) des Pedals eine Trägheitsgröße zu bestimmen, insbesondere einen Trägheitsstrom (I_{Inertia}) zu bestimmen, der durch die elektrische Spule der elektrischen Maschine (2) fließt; **gekennzeichnet durch**
- ein Strommodul (5), das dazu konfiguriert und angepasst ist, einen Generatorstrom (I_{G}) der elektrischen Maschine (2) basierend auf der Tretwiderstandsgröße und der Trägheitsgröße zu bestimmen.

2. Steuereinheit (1) nach Anspruch 1, wobei
der Tretparameter (k_{TW}) zumindest teilweise aus der Winkelgeschwindigkeit (ω) bestimmt ist, insbesondere der Winkelgeschwindigkeit (ω) entspricht; und/oder der Tretparameter (k_{TW}) zumindest teilweise aus einer Generatorstufe, die der Steuereinheit (1) von einer Nutzerin mitteilbar ist, bestimmt ist.

3. Steuereinheit (1) nach einem der vorstehenden Ansprüche, wobei
das Strommodul (5) zur Bestimmung des Generatorstroms (I_{G}) den Tretwiderstandsstrom (I_{TW}) und den Trägheitsstrom (I_{Inertia}) richtungsabhängig addiert.

4. Steuereinheit (1) nach einem der vorstehenden Ansprüche, wobei der Tretwiderstandsstrom (I_{TW}) oberhalb eines Schwellwertes der Winkelgeschwindigkeit (ω) und des Tretmoments (M_{Tret}) positiv ist und aus der elektrischen Maschine (2) herausfließt, und
der Tretwiderstandsstrom (I_{TW}) unterhalb des Schwellwertes der Winkelgeschwindigkeit (ω) und des Tretmoments (M_{Tret}) negativ ist und in die elektrische Maschine (2) hineinfließt; wobei insbesondere der Schwellwert der Winkelgeschwindigkeit (ω) und des Tretmoments (M_{Tret}) kleiner als 45° pro Sekunde und Newtonmeter ist.

5. Steuereinheit (1) nach einem der vorstehenden Ansprüche, wobei
der Trägheitsstrom (I_{Inertia}) bei einer Zunahme der Winkelgeschwindigkeit (ω) positiv bestimmt ist und aus der elektrischen Maschine (2) herausfließt und/oder bei einer Abnahme der Winkelgeschwindigkeit (ω) negativ bestimmt ist und in die elektrische Maschine (2) hineinfließt.

6. Steuereinheit (1) nach Anspruch 5, wobei
die elektrische Maschine (2) in einem Zustand, in dem ein Betrag des negativen Trägheitsstroms (I_{Inertia}) größer ist als ein Betrag des Tretwiderstandsstroms (I_{TW}), derart angesteuert wird, dass sie als Elektromotor fungiert.

7. Steuereinheit (1) nach Anspruch 5 oder 6, wobei
die elektrische Maschine (2) in einem Zustand, in dem ein Betrag des Trägheitsstroms (I_{Inertia}) kleiner ist als ein Betrag des positiven Tretwiderstandsstroms (I_{TW}), derart angesteuert wird, dass sie als Generator fungiert.

8. Steuereinheit (1) nach einem der vorstehenden Ansprüche, die
einer Taktung unterliegt, bei der der elektrischen Maschine (2) Steuerbefehle übermittelbar sind, wobei die Taktung zwischen 100 Hz und 40 kHz, insbesondere zwischen 200 Hz und 3 kHz liegt.

9. Steuereinheit (1) nach einem der vorstehenden Ansprüche, die
ein eigenständiges System ist, das eine Leistungselektronik enthält und das autark auf Basis des Tretparameters (k_{TW}) und der Änderung der Winkelgeschwindigkeit (ω) in der Lage ist, der elektrischen Maschine (2) Steuerbefehle zu übermitteln.

10. Steuereinheit (1) nach einem der vorstehenden Ansprüche, wobei
das Trägheitsmodul (4) neben der Änderung der Winkelgeschwindigkeit (ω) einen Trägheitsparameter (k_{Inertia}) heranzieht, um den Trägheitsstrom (I_{Inertia}) zu bestimmen, wobei der Trägheitsparameter (k_{Inertia}) insbesondere zumindest teilweise von einer Generatorstufe, die der Steuereinheit (1) von einem Nutzer mitteilbar ist, bestimmt ist.

11. Steuereinheit (1) nach einem der vorstehenden Ansprüche, die
dazu konfiguriert und angepasst ist, die elektrische Maschine (2) derart anzusteuern, dass der Trägheitsstrom (I_{Inertia}) durch dieselbe Spule der elektrischen Maschine (2) fließt, wie der Tretwiderstandsstrom (I_{TW}).

12. Steuereinheit (1) nach einem der vorstehenden Ansprüche, wobei
das Trägheitsmodul (4) dazu konfiguriert und angepasst ist, bei Erhalt eines Auflösesignals den Trägheitsstrom (I_{Inertia}) bei einer Änderung der Winkelgeschwindigkeit (ω) auf null zu setzen.

13. Steuereinheit (1) nach Anspruch 12, wobei
das Auflösesignal von einer negativen Winkelgeschwindigkeit (ω) und/oder von einem Zustand, in dem das Pedal keinen Kontakt zu einer Nutzerin hat, ausgelöst wird.

14. Steuereinheit (1) nach einem der vorstehenden Ansprüche, die
dazu konfiguriert und angepasst ist, basierend auf der Winkelgeschwindigkeit (ω) und/oder dem Tretmoment (M_{Tret}) ein Steuersignal zu bestimmen, welches einem elektrischen Antrieb (140) bereitgestellt ist.

15. System, insbesondere kettenloses Lastenfahrrad (100), aufweisend
- eine Steuereinheit (1) nach einem der vorstehenden Ansprüche;
- die elektrische Maschine (2); und
- eine Antriebsbatterieeinheit (120), die mit der elektrischen Maschine (2) elektrisch verbunden ist;
wobei die Steuereinheit (1) dazu angepasst und konfiguriert ist, bei einer ersten Bestimmung durch das Strommodul (5) den Generatorstrom (I_{G}) von der elektrischen Maschine (2) zur Antriebsbatterieeinheit (120) fließen zu lassen und bei einer zweiten Bestimmung durch das Strommodul (5) den Generatorstrom (I_{G}) von der Antriebsbatterieeinheit (120) zur elektrischen Maschine (2) fließen zu lassen.

16. System nach Anspruch 15, ferner aufweisend
einen elektrischen Antrieb (140), der dazu konfiguriert und angepasst ist, das System, insbesondere das kettenlose Lastenfahrrad (100), anzutreiben, wobei der elektrische Antrieb (140) mit der elektrischen Maschine (2) und/oder der Antriebsbatterieeinheit (120) verbunden ist.

17. Verfahren zur Ansteuerung einer elektrischen Maschine (2), der ein Tretmoment (M_{Tret}) bei einer Winkelgeschwindigkeit (ω) mittels einer Tretkurbel zuführbar ist, aufweisend die Schritte:
- Erhalten eines Tretparameters (k_{TW}) und Bestimmen einer Tretwiderstandsgröße basierend auf dem Tretparameter (k_{TW});
- Erhalten einer Änderung einer Winkelgeschwindigkeit (ω) des Pedals und Bestimmen der Trägheitsgröße basierend auf der Änderung der Winkelgeschwindigkeit (ω) des Pedals; und
- Bestimmen eines Generatorstroms (I_{G}) der elektrischen Maschine (2) basierend auf der Tretwiderstandsgröße und der Trägheitsgröße.

18. Verfahren nach Anspruch 17, ferner aufweisend den Schritt:
Erhalten eines Auflösesignals und Bestimmen des Generatorstroms (I_{G}) unter Berücksichtigung des Auflösesignals.

## Claims

1. Control unit (1) for controlling an electric machine (2), to which a pedaling torque (M_{Tret}) at an angular velocity (ω) is suppliable via a pedal crank, comprising:
- a pedal resistance module (3), which is configured and adapted to determine, from a pedaling parameter (k_{TW}), a pedaling resistance value which either assists the pedaling torque (M_{Tret}) or counteracts the pedaling torque (M_{Tret}), in particular to determine a pedal resistance current (I_{TW}) flowing through an electric coil of the electric machine (2);
- an inertia module (4), which is configured and adapted to determine a quantity of inertia from the change of the angular velocity (ω) of the pedal, in particular to determine an inertia current (I_{Inertia}) flowing through an electric coil of the electric machine (2); and
- a current module (5), which is configured and adapted to determine a generator current (I_{G}) of the electric machine (2) based on the pedal resistance quantity and the inertia quantity.

2. Control unit (1) according to claim 1, wherein
the pedaling parameter (k_{TW}) is determined at least partially from the angular velocity (ω), wherein in particular the pedaling parameter (k_{TW}) equals the angular velocity (ω), and/or the pedaling parameter (k_{TW}) is determined at least partially from a generator stage, which, is communicable to the control unit (1) by a user.

3. Control unit (1) according to one of the preceding claims, wherein
the current module (5) adds the pedal resistance current (I_{TW}) and the inertia current (I_{Inertia}) in a direction-dependent manner to determine the generator current (I_{G}).

4. Control unit (1) according to one of the preceding claims, wherein
the pedaling resistance current (I_{TW}) is positive above a threshold value of the angular velocity (ω) and the pedaling torque (M_{Tret}) and flows out of the electrical machine (2), and
the pedaling resistance current (I_{TW}) is negative below a threshold value of the angular velocity (ω) and the pedaling torque (M_{Tret}) and flows into the electrical machine (2);
whereby in particular, the threshold value of the angular velocity (ω) and the pedaling torque (M_{Tret}) are smaller than 45° per second and Newton-meter.

5. Control unit (1) according to one of the preceding claims, wherein
the inertia current (I_{Inertia}) is determined to be positive for an increasing angular velocity (ω) and flows out of the electrical machine (2) and/or is determined to be negative for a decreasing angular velocity (ω) and flows into the electrical machine (2).

6. Control unit (1) according to claim 5, wherein
the electrical machine (2) is controlled, in a state where the absolute value of the negative inertia current (I_{Inertia}) is larger than the absolute value of the pedaling resistance current (I_{TW}), in such a way that it functions as an electric motor.

7. Control unit (1) according to claim 5 or 6, wherein
the electrical machine (2) is controlled, in a state where the absolute value of the negative inertia current (I_{Inertia}) is smaller than the absolute value of the pedaling resistance current (I_{TW}), in such a way that it functions as a generator.

8. Control unit (1) according to one of the preceding claims, which
operates at a clock frequency at which control commands can be transmitted to the electric machine (2), wherein the clock frequency lies between 100 Hz and 40 kHz, in particular between 200 Hz and 3 kHz.

9. Control unit (1) according to one of the preceding claims, which
is a standalone system comprising power electronics and which is capable of independently transmitting control commands to the electric motor (2) on the basis of the pedaling parameter (k_{TW}) and the change in angular velocity (ω).

10. Control unit (1) according to one of the preceding claims, wherein
the inertia module (4) uses an inertia parameter (k_{Inertia}) in addition to the change in angular velocity (ω) to determine the inertia current (I_{Inertia}), wherein the inertia parameter (k_{Inertia}) is determined, in particular, at least in part by a generator stage which is communicable to the control unit (1) by a user.

11. Control unit (1) according to one of the preceding claims, which
is configured and adapted to control the electric machine (2) in such a way that the inertia current (I_{Inertia}) flows through the same coil of the electric machine (2) as the pedaling resistance current (I_{TW}).

12. Control unit (1) according to one of the preceding claims, wherein
the inertia module (4) is configured and adapted to set the inertia current (I_{Inertia}) to zero upon receipt of a reset signal when there is a change in angular velocity (ω).

13. Control unit (1) according claim 12, wherein
the reset signal is triggered by a negative angular velocity (ω) and/or by a state in which the pedal is not in contact with a user.

14. Control unit (1) according to one of the preceding claims, wherein
is configured and adapted to determine, based on the angular velocity (ω) and/or the pedalling torque (M_{Tret}), a control signal which is supplied to an electric drive (140).

15. A system, in particular a chainless cargo bike (100), comprising
- a control unit (1) according to one of the preceding claims;
- the electric machine (2); and
- a traction battery unit (120), which is electrically connected with the electric machine (2);
wherein the control unit (1) is adapted and configured, upon a first determination by the current module (5), to allow the generator current (I_{G}) to flow from the electric machine (2) to the traction battery unit (120) and, upon a second determination by the current module (5), to allow the generator current (I_{G}) to flow from the traction battery unit (120) to the electric machine (2).

16. A system according to claim 15, further comprising
an electric drive (140) configured and adapted to drive the system, in particular the chainless cargo bike (100), wherein the electric drive (140) is connected to the electric machine (2) and/or the traction battery unit (120).

17. A method for controlling an electric machine (2) to which a pedalling torque (M_{Tret}) can be applied at an angular velocity (ω) by means of a pedal crank, comprising the steps of:
- Obtaining a pedalling parameter (k_{TW}) and determining a pedalling resistance value based on the pedalling parameter (k_{TW})
- Obtaining a change in the angular velocity (ω) of the pedal and determining an inertia value based on the change in the angular velocity (ω) of the pedal; and
- determining a generator current (I_{G}) of the electric machine (2) based on the pedalling resistance value and the inertia value.

18. The method according to claim 17, further comprising the step of:
receiving a reset signal and determining the generator current (I_{G}) taking the reset signal into account.

## Revendications

1. Unité de commande (1) destinée à commander une machine électrique (2), à laquelle un couple de pédalage (M_{Tret} ) à une vitesse angulaire (ω) peut être fourni via un pédalier, comprenant :
- un module de résistance de pédalage (3), qui est configuré et adapté pour déterminer, à partir d'un paramètre de pédalage (k_{TW} ), une valeur de résistance de pédalage qui soit assiste le couple de pédalage (M_{Tret} ), soit s'oppose au couple de pédalage (M_{Tret} ), en particulier pour déterminer un courant de résistance de pédalage (I_{TW} ) circulant dans une bobine électrique de la machine électrique (2) ;
- un module d'inertie (4), qui est configuré et adapté pour déterminer une quantité d'inertie à partir de la variation de la vitesse angulaire (ω) de la pédale, en particulier pour déterminer un courant d'inertie (I_{Inertia} ) circulant dans une bobine électrique de la machine électrique (2) ; et
- un module de courant (5), qui est configuré et adapté pour déterminer un courant de générateur (I_{G} ) de la machine électrique (2) sur la base de la grandeur de résistance de la pédale et de la grandeur d'inertie.

2. Unité de commande (1) selon la revendication 1, dans laquelle
le paramètre de pédalage (k_{TW}) est déterminé au moins en partie à partir de la vitesse angulaire (γ), le paramètre de pédalage (k_{TW}) étant notamment égal à la vitesse angulaire (γ), et/ou
le paramètre de pédalage (k_{TW} ) est déterminé au moins en partie à partir d'un étage générateur qui, I , peut être transmis à l'unité de commande (1) par un utilisateur.

3. Unité de commande (1) selon l'une des revendications précédentes, dans laquelle
le module de courant (5) additionne le courant de résistance de pédalage (I_{TW} ) et le courant d'inertie (I_{Inertia} ) de manière dépendante du sens pour déterminer le courant de générateur (I_{G} ).

4. Unité de commande (1) selon l'une des revendications précédentes, dans laquelle
le courant de résistance de pédalage (I_{TW} ) est positif au-dessus d'une valeur seuil de la vitesse angulaire (ω) et du couple de pédalage (M_{Tret} ) et sort de la machine électrique (2), et le courant de résistance au pédalage (I_{TW} ) est négatif en dessous d'une valeur seuil de la vitesse angulaire (ω) et du couple de pédalage (M_{Tret} ) et circule vers la machine électrique (2) ;
dans lequel, en particulier, la valeur seuil de la vitesse angulaire (γ) et du couple de pédalage (M_{Tret}) est inférieure à 45° par seconde et à 1 newton-mètre.

5. Unité de commande (1) selon l'une des revendications précédentes, dans laquelle
le courant d'inertie (I_{Inertia} ) est déterminé comme étant positif pour une vitesse angulaire (ω) croissante et s'écoule hors de la machine électrique (2) et/ou est déterminé comme étant négatif pour une vitesse angulaire (ω) décroissante et s'écoule vers la machine électrique (2).

6. Unité de commande (1) selon la revendication 5, dans laquelle
la machine électrique (2) est commandée, dans un état où la valeur absolue du courant d'inertie négatif (I_{Inertia} ) est supérieure à la valeur absolue du courant de résistance au pédalage (I_{TW} ), de telle sorte qu'elle fonctionne comme un moteur électrique.

7. Unité de commande (1) selon la revendication 5 ou 6, dans laquelle
la machine électrique (2) est commandée, dans un état où la valeur absolue du courant d'inertie négatif (I_{Inertia}) est inférieure à la valeur absolue du courant de résistance au pédalage (I_{TW}), de manière à fonctionner comme un générateur.

8. Unité de commande (1) selon l'une des revendications précédentes, qui
fonctionne à une fréquence d'horloge à laquelle des commandes de commande peuvent être transmises à la machine électrique (2), la fréquence d'horloge étant comprise entre 100 Hz et 40 kHz, en particulier entre 200 Hz et 3 kHz.

9. Unité de commande (1) selon l'une des revendications précédentes, qui
est un système autonome comprenant une électronique de puissance et qui est capable de transmettre de manière autonome des commandes de commande au moteur électrique (2) sur la base du paramètre de pédalage (k_{TW} ) et de la variation de la vitesse angulaire (ω).

10. Unité de commande (1) selon l'une des revendications précédentes, dans laquelle
le module d'inertie (4) utilise un paramètre d'inertie (k_{Inertia} ) en plus de la variation de vitesse angulaire (ω) pour déterminer le courant d'inertie (I_{Inertia} ), le paramètre d'inertie (k_{Inertia} ) étant déterminé, en particulier, au moins en partie par un étage générateur qui peut être communiqué à l'unité de commande (1) par un utilisateur.

11. Unité de commande (1) selon l'une des revendications précédentes, qui
est configurée et adaptée pour commander la machine électrique (2) de telle sorte que le courant d'inertie (I_{Inertia} ) circule dans la même bobine de la machine électrique (2) que le courant de résistance au pédalage (I_{TW} ).

12. Unité de commande (1) selon l'une des revendications précédentes, dans laquelle
le module d'inertie (4) est configuré et adapté pour mettre le courant d'inertie (I_{Inertia} ) à zéro à la réception d'un signal de réinitialisation lorsqu'il y a une variation de la vitesse angulaire (ω).

13. Unité de commande (1) selon la revendication 12, dans laquelle
le signal de réinitialisation est déclenché par une vitesse angulaire négative (ω) et/ou par un état dans lequel la pédale n'est pas en contact avec un utilisateur.

14. Unité de commande (1) selon l'une des revendications précédentes, dans laquelle
est configurée et adaptée pour déterminer, sur la base de la vitesse angulaire (ω) et/ou du couple de pédalage (M_{Tret} ), un signal de commande qui est fourni à un entraînement électrique (140).

15. Système, en particulier un vélo cargo sans chaîne (100), comprenant
- une unité de commande (1) selon l'une des revendications précédentes ;
- la machine électrique (2) ; et
- une unité de batterie de traction (120), qui est connectée électriquement à la machine électrique (2) ;
dans laquelle l'unité de commande (1) est adaptée et configurée, lors d'une première détermination par le module de courant (5), pour permettre au courant du générateur (I_{G} ) de circuler de la machine électrique (2) vers l'unité de batterie de traction (120) et, lors d'une deuxième détermination par le module de courant (5), pour permettre au courant du générateur (I_{G} ) de circuler de l'unité de batterie de traction (120) vers la machine électrique (2).

16. Système selon la revendication 15, comprenant en outre
un entraînement électrique (140) configuré et adapté pour entraîner le système, en particulier le vélo cargo sans chaîne (100), l'entraînement électrique (140) étant relié à la machine électrique (2) et/ou à l'unité de batterie de traction (120).

17. Procédé de commande d'une machine électrique (2) à laquelle un couple de pédalage (M_{Tret}) peut être appliqué à une vitesse angulaire (ω) au moyen d'une manivelle de pédale, comprenant les étapes suivantes :
- Obtenir un paramètre de pédalage (k_{TW} ) et déterminer une valeur de résistance au pédalage sur la base du paramètre de pédalage (k_{TW} )
- Obtenir une variation de la vitesse angulaire (ω) de la pédale et déterminer une valeur d'inertie sur la base de la variation de la vitesse angulaire (ω) de la pédale ; et
- déterminer un courant de générateur (I_{G} ) de la machine électrique (2) sur la base de la valeur de résistance au pédalage et de la valeur d'inertie.

18. Procédé selon la revendication 17, comprenant en outre l'étape consistant à :
la réception d'un signal de réinitialisation et la détermination du courant du générateur (I_{G} ) en tenant compte du signal de réinitialisation.
